# EUROPÄISCHE PATENTSCHRIFT

(11) **EP 1 889 740 B1**
(45) Veröffentlichungstag und Bekanntmachung des Hinweises auf die Patenterteilung: **05.09.2012**
(21) Anmeldenummer: 07111268.4
(22) Anmeldetag: 28.06.2007
(51) Int. Cl.: B60J 7/22

(54) **Schott für einen PKW**
Partition for a car
Cloison étanche pour un véhicule automobile

(30) Priorität: 28.06.2006 DE 102006030076
(43) Veröffentlichungstag der Anmeldung: 20.02.2008
(73) Patentinhaber: FKT GmbH, 85104 Pförring (DE); Körber, Stefan, 85092 Kösching (DE)
(72) Erfinder: Ortel, Andreas, 92334, Berching (DE); Körber, Stefan, 85092, Kösching (DE)
(74) Vertreter: Schlief, Thomas P.

(56) Entgegenhaltungen:
- EP-A- 0 778 171
- EP-A- 1 621 386
- DE-A1- 10 053 701
- DE-A1- 19 616 448
- DE-C1- 4 037 705
- US-A1- 2003 085 006

## Beschreibung

Die vorliegende Erfindung betrifft ein Schott für ein Personenkraftfahrzeug nach dem Oberbegriff des Anspruchs 1.

Derartige Schotts sind insbesondere als Windschotts im Stand der Technik in verschiedenen Ausführungen bekannt. Insbesondere bei einer speziellen Art weist das Windschott eine Abdeckung auf, die derart an dem Personenkraftfahrzeug montiert wird, dass durch sie der Rücksitzinnenraum des Personenkraftfahrzeuges abgedeckt ist. Der Windschottrahmen ist schwenkbar am Rahmen der Abdeckung angeordnet und spannt in Gebrauchsstellung eine Flachmaterialbahn direkt hinter den Lehnen der Vordersitze, um die Insassen auf den Vordersitzen vor unangenehmen Luftströmungen zu schützen. Die Abdeckung dient zugleich der Befestigung des Windschotts in dem Fahrzeug.

Ein bekanntes Windschott gemäß dem Oberbegriff des Anspruchs 1 ist aus der DE 196 16 448 A1 bekannt, wobei zum Zusammenfalten zunächst die Abdeckung um eine Klappachse zum Windschottrahmen verschwenkt wird, um dann den Rahmen samt Abdeckung entlang von senkrecht zur besagten Klappachse rechtwinkligen Achsen noch einmal zu klappen. Das Windschott gemäß der DE 196 16 448 A1 weist eine manuell lösbare Verriegelung an einer Unterseite der Abdeckung auf, welche die beiden Hälften der Abdeckung in ihrer aufgeklappten Funktionsposition in der gemeinsamen Ebene gegeneinander fixiert. Die DE 100 38 714 A1 beschreibt vom grundsätzlichen Aufbau her ein ähnliches Windschott wie die 196 16 448 A1.

Nachteilig bei den bekannten Schotts ist, dass sie größeren Belastungen - wie sie beispielsweise bei Windschotts durch die Verwirbelungen im Fahrbetrieb entstehen - nur unzureichend standhalten.

Es ist Aufgabe der vorliegenden Erfindung, ein Schott für ein Personenkraftfahrzeug zur Verfügung zu stellen, welches auch bei hohen Belastungen eine hohe Formstabilität des Schotts garantiert.

Diese Aufgabe wird bei dem eingangs genannten Schott durch die Merkmale des Anspruchs 1 gelöst.

Die Vorteile der Erfindung liegen insbesondere darin, dass durch die erfindungsgemäße Verriegelungseinrichtung am Abdeckungsrahmen die Teilrahmen relativ zueinander fixiert werden können, wenn das Schott in die Gebrauchsposition des Schotts geklappt wird. Das Schott kann somit nicht unbeabsichtigt aus seiner Gebrauchsposition aus dem Kfz geschleudert werden. Insbesondere bei Windschotts erhöht sich somit die Sicherheit erheblich. Dadurch, dass die Verriegelungseinrichtung im Bereich der Anlenkung des Schottrahmens an dem Abdeckungsrahmen angeordnet ist, kann das erfindungsgemäße Schott eine höhere Steifigkeit erhalten.

Besonders bevorzugt ist die Verriegelungseinrichtung schwenkbar am Abdeckungsrahmen angeordnet. In einer demgemäß vorteilhaften Ausführungsform ist die Verriegelungseinrichtung im Bereich der Anlenkung des Schottrahmens an den Abdeckungsrahmen schwenkbar befestigt.

Bevorzugt umfasst die Verriegelungseinrichtung zumindest zwei zueinander bewegliche Verriegelungselemente, von denen das eine an einem Teilrahmen der Abdeckung, das andere am anderen Teilrahmen des Abdeckungsrahmens angeordnet ist. Diese mindestens zwei Verriegelungselemente können dann in Gebrauchsposition des Schotts relativ zueinander fixiert werden.

Gemäß einer diesbezüglich besonders bevorzugten Ausführungsform ist jeweils eines der Verriegelungselemente an jeweils einem Teilrahmen des Abdeckungsrahmens schwenkbar angeordnet, wobei die Verriegelungselemente selbst mittels mindestens eines Drehgelenks miteinander schwenkbar verbunden sind. Die Verriegelungselemente lassen sich dann beim Auffalten des Schotts so verschwenken, dass das sie verbindende Gelenk mitverschwenkt wird. Es ist hierbei bevorzugt, wenn das die beiden Verrieglungselemente verbindende Gelenk als Drehgelenk ausgebildet ist und die Schwenkachse dieses Drehgelenks stets senkrecht zu den Schwenkachsen der Verriegelungselemente mit dem Abdeckungsrahmen verläuft.

Vorteilhafterweise fluchtet die Schwenkachse des die beiden Verrieglungselemente verbindenden Drehgelenks beim Aufklappen des Schotts von der Aufbewahrposition in die Gebrauchsposition anfangs mit der Schwenkachse des die beiden Teilrahmen verbindenden Drehgelenks. Diese Ausgestaltung ermöglicht eine Zwischenposition der Verriegelungseinrichtung, in der sie - durch Zusammenfalten des Schotts - wieder in eine Ruhestellung gebracht oder in die Verriegelungsstellung überführt werden kann.

In der Verriegelungsstellung liegt die die beiden Verriegelungselemente verbindende Schwenkachse in einem Winkel zur Schwenkachse der beiden Teilrahmen. In dieser Stellung können die beiden Teilrahmen des Abdeckungsrahmens nicht mehr gegeneinander verschwenkt werden, wodurch eine sehr hohe Stabilität des Schotts in der Gebrauchsposition resultiert. Das Schott kann dann - auch bei hohen Belastungen - nicht durch Aufbiegen bzw. Aufklappen der beiden Teilrahmen aus dem Fahrzeug heraus geschleudert werden.

Zur Überführung von der genannten Zwischenstellung in die Verriegelungsstellung ist die Verriegelungseinrichtung vorzugsweise federbelastet, wobei diese beim Auffalten des Schotts automatisch in die Verriegelungsstellung schwenkt. Es ist hierbei vorteilhaft, wenn die Federbelastung erst bei ganz aufgeklapptem Abdeckungsrahmen auf die Verriegelungseinrichtung wirkt.

Eine geringe Packhöhe in der Aufbewahrungsposition ergibt sich vorteilhafterweise, wenn die Verriegelungseinrichtung in der Ruhestellung im Wesentlichen in einer Ebene mit dem Abdeckungsrahmen bzw. in den Ebenen der Teilrahmen liegt.

Es kommt demgegenüber der Stabilität des Schotts in der Gebrauchsposition zugute, wenn die Verriegelungseinrichtung in der Verriegelungsstellung vom Abdeckungsrahmen absteht. Hierbei ist es bevorzugt, wenn die Verriegelungseinrichtung um mehr als 90° aus der Ruhestellung in die Verriegelungsstellung verschwenkt. Die Verriegelungseinrichtung schließt hierbei vorteilhafterweise mit dem Schottrahmen einen Winkel von ca. 160° bis 200° ein.

Gemäß einer vorteilhaften Ausführungsform erstreckt sich die Verriegelungseinrichtung im Wesentlichen über die gesamte Breite des Abdeckungsrahmens. Eine alternative Verriegelungseinrichtung ist kürzer ausgebildet und lediglich im Bereich der Schwenkachse der beiden Teilrahmen angeordnet.

Vorteilhafte Weiterbildungen der Erfindung sind durch die Merkmale der Unteransprüche gekennzeichnet.

Im Folgenden wird ein Ausführungsbeispiel der Erfindung anhand der Figuren näher beschrieben. Es zeigen:
- **Figur 1**: ein Windschott in Einbauposition in einem Fahrzeug in einer Ansicht von vorne;
- **Figur 2**: eine Detailansicht eines Abdeckungsrahmens im halbaufgeklappten Zustand (perspektivische Aufsicht);
- **Figur 3**: der Abdeckungsrahmen gemäß Figur 2 im aufgeklappten Zustand mit Verriegelungseinrichtung in Zwischenstellung (Detailansicht in perspektivischer Aufsicht);
- **Figur 4**: der Abdeckungsrahmen gemäß Figuren 2 und 3 im aufgeklappten Zustand mit Verriegelungseinrichtung in Verriegelungsstellung (Detailansicht in perspektivischer Aufsicht);
- **Figur 5**: der Abdeckungsrahmen gemäß Figuren 2 bis 4 in perspektivischer Unteransicht mit Verriegelungseinrichtung in Zwischenstellung (Detailansicht);
- **Figur 6**: ein aufgeklappter Abdeckungsrahmen mit einer alternativen Verriegelungseinrichtung in Zwischenstellung (perspektivische Aufsicht);
- **Figur 7**: der Abdeckungsrahmen gemäß Figur 6 mit Verriegelungseinrichtung in Verriegelungsstellung (perspektivische Aufsicht), und
- **Figur 8**: eine Querschnittsdarstellung der federbelasteten Verriegelungseinrichtung.

Ein Windschott 1 umfasst eine Abdeckung 2, welche einerseits der Befestigung des Windschotts 1 in dem Fahrzeug dient, andererseits einen Teilbereich einer Fahrgastraumöffnung des Personenkraftfahrzeuges abdeckt. An der Abdeckung 2 ist um eine Schwenkachse 5 der ebenfalls zum Windschott 1 gehörende Windschottrahmen 6 schwenkbar angeordnet. Der Windschottrahmen 6 besteht im Wesentlichen aus linearen Hohlraumprofilen 9 und gebogenen Eckverbindern 19. Gemäß der vorliegenden Darstellung befindet sich der Windschottrahmen 6 aufgeklappt in Gebrauchsposition und erstreckt sich hierbei im Wesentlichen über die Breite des Insassenraumes, wobei er nahezu senkrecht hinter den hier nicht dargestellten Kopfstützen der Vordersitze positioniert ist. Die horizontale Abdeckung 2 erstreckt sich im Wesentlichen parallel zu einer Gürtellinie 7 des Kraftfahrzeuges bis hin zu den Lehnen der Rücksitze 8. Der Raum unterhalb der Abdeckung 2 kann somit als Stauraum genutzt werden. Der Windschottrahmen 6 sowie auch der Rahmen 13 der Abdeckung 2 sind weitgehend steif ausgebildet. An beiden Rahmen 6 bzw. 13 sind jeweils windabweisende Flachmaterialbahnen 10a, 10b aufgespannt, welche aus Gründen der Übersichtlichkeit zum Teil nur angedeutet sind. Die Flachmaterialbahnen 10a, 10b sind windabweisend ausgeführt, können jedoch auch aus einem luftdurchlässigen Material wie einem Netz oder Gewebe hergestellt sein.

Um das Windschott 1 bei Nichtgebrauch platzsparend verstauen zu können, weist zumindest der Rahmen 6 zwei Scharniere 20 auf, so dass das Windschott 1 - nach Anschwenken der Abdeckung 2 an den Schottrahmen 6 - um die Klappachse 12 zusammenklappbar ist. Der Rahmen 13 der Abdeckung 2 besteht hierzu aus zwei Teilen 13a, 13b, welche ebenfalls gelenkig miteinander verbunden sind, so dass nach dem Anschwenken des Windschottrahmens 6 an die Abdeckung 2 beide Rahmen 6, 13 um die Klappachse 12 zusammengeklappt werden können. Die Scharniere 20 sind hierzu als Doppelgelenke ausgeführt, so dass die Abdeckung 2 in eingeklapptem Zustand zwischen den Teilen des Windschottrahmens 6 zu liegen kommt, s. hierzu auch die DE 196 16 448 A1 und die DE 100 38 714 A1. Ebenso wäre es auch möglich, dass nur ein Teil der Abdeckung 2 mit dem Schottrahmen 6 fest verbunden ist, während der andere Teil der Abdeckung 2 lösbar mit dem Rahmen 6 verbunden ist. Auch hierdurch ist es möglich, das Windschott 1 auf ein sehr kleines Maß zusammenzufalten.

Zur Befestigung des Windschotts 1 in dem Fahrzeug weist es vordere und hintere Fixiereinrichtungen 14, 15 auf, mittels welcher die Abdeckung 2 in dem Fahrzeug fixiert wird. Diese können beispielsweise als ausfahrbare oder starre Stifte ausgebildet sein.

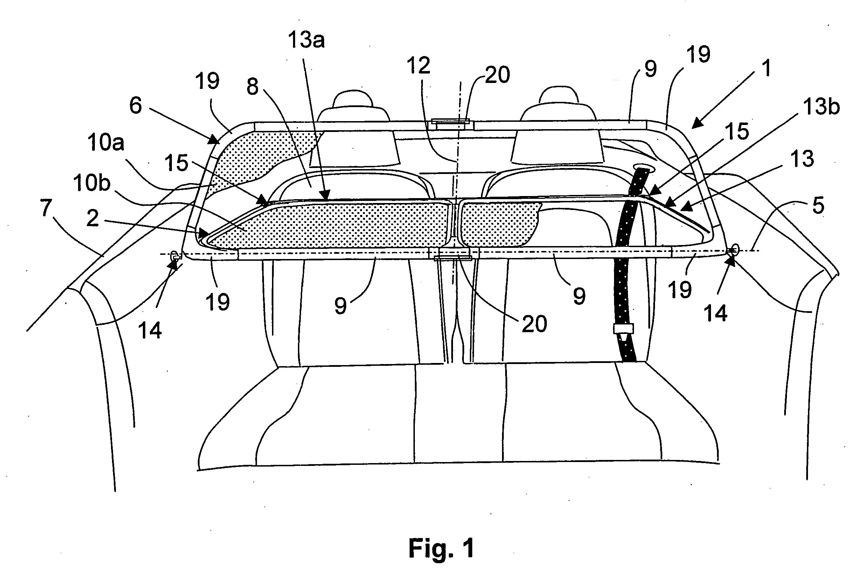

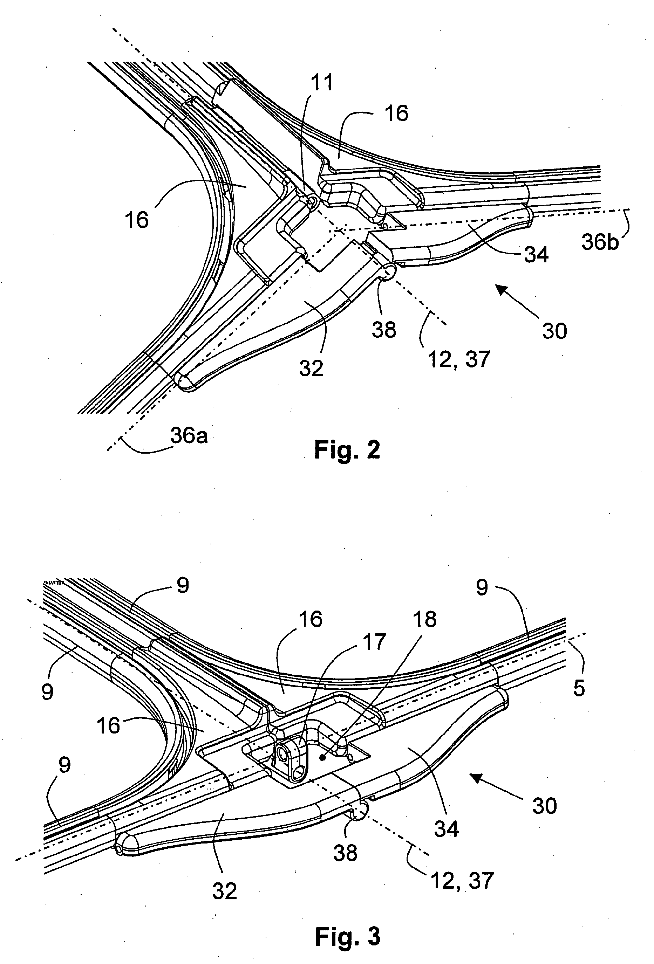

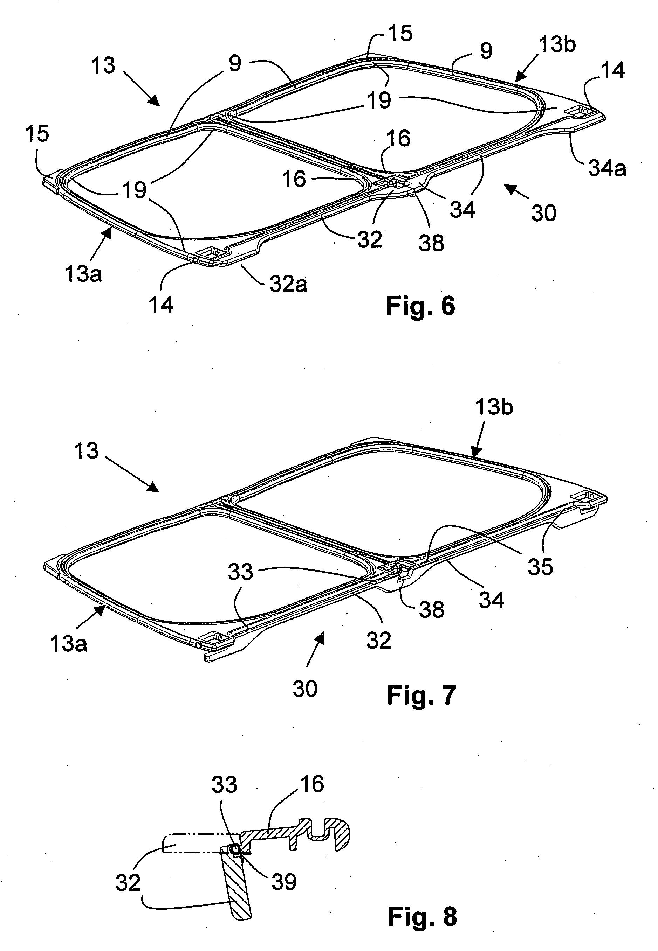

In den Figuren 2 bis 5 in Detailansicht und in den Figuren 6 und 7 in Gesamtansicht ist dargestellt, wie an einem Abdeckungsrahmen 13, der aus zwei Teilrahmen 13a, 13b besteht, eine Verriegelungseinrichtung 30 angeordnet ist. In all diesen Figuren sind weder der Schottrahmen 6 noch die Scharniere 20 dargestellt. Der Schottrahmen 6 ragt bei diesen Darstellungen nach oben (entsprechend der Figur 1).

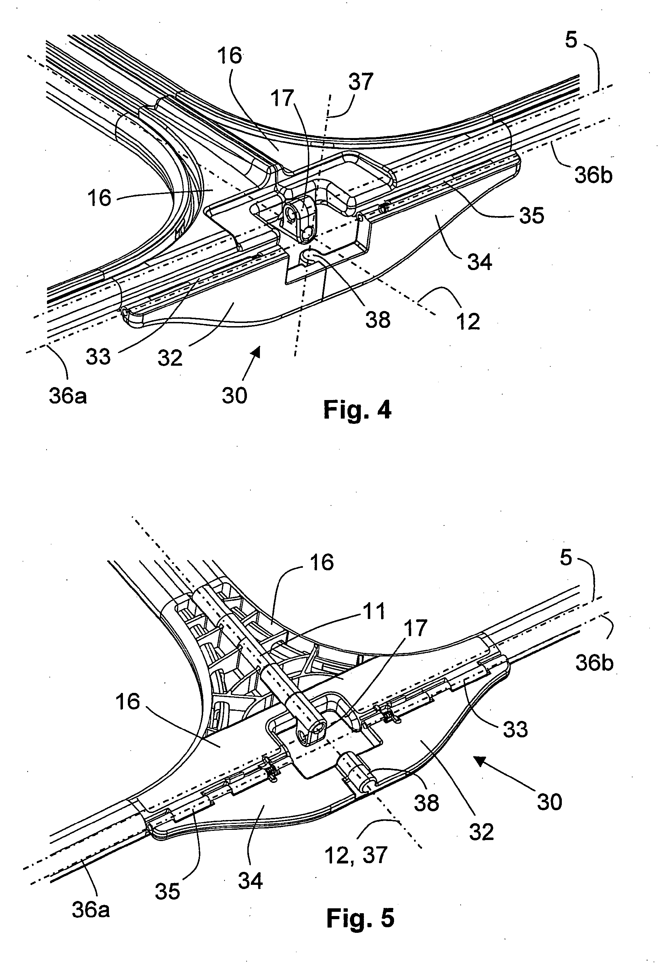

Bei der Ausführungsform gemäß der Figuren 2 bis 5 sind am Abdeckungsrahmen 13 im Bereich der Anlenkung des nicht dargestellten Schottrahmens 6 (s. Figur 1) zwei Verriegelungselemente 32, 34 der Verriegelungseinrichtung 30 schwenkbar angelenkt. Die beiden Verriegelungselemente 32, 34, die sich insgesamt über die Breite der beiden Eckprofile 16 des Abdeckungsrahmens 13 erstrecken, sind ihrerseits mit einem Drehgelenk 38, das eine Schwenkachse 37 aufweist, verbunden. Die Schwenkachse 37 verläuft stets senkrecht zu den Schwenkachsen 36a, 36b, um welche die Verriegelungselemente 32, 34 gegenüber dem Teilrahmen 13a, 13b mittels zweier Drehgelenke 33, 35 (s. Figuren 4 und 5) verschwenkbar sind.

Die Schwenkachse 12 des Drehgelenks 11, mit dem die beiden Teilrahmen 13a, 13b miteinander verbunden sind, fluchtet mit der Schwenkachse 37 in den in den Figuren 2, 3 und 5 dargestellten Stellungen. Dieses sind die Stellungen, in denen sich die Verriegelungseinrichtung 30 nicht in Verriegelungsstellung befindet. Demgemäß kann der Abdeckungsrahmen 13 in diesen Stellungen ohne Widerstand durch die Verriegelungseinrichtung 30 geklappt werden.

Zum Überführen des Windschotts 1 aus seiner Aufbewahrposition in die Gebrauchsposition wird es zunächst um das Doppelgelenk 20 aufgeschwenkt, wobei dann sowohl der Schottrahmen 6 als auch der Abdeckungsrahmen 13 in im Wesentlichen zueinander parallelen Ebenen aufgespannt sind. Anschließend kann der Schottrahmen 6 um die Schwenkachse 5 vom Abdeckungsrahmen 13 weggeschwenkt werden. In der Figur 2 ist der Abdeckungsrahmen 13 in einer halbgeklappten Stellung während des erstgenannten Aufschwenkvorgangs dargestellt (der Schottrahmen 6 befindet sich in etwa in der gleichen Aufklappposition wie der Abdeckungsrahmen 13, ist aber hier nicht dargestellt). Beim weiteren Aufklappen kommen die beiden Teilrahmen 13a, 13 b in die in Figur 3 gezeigte Position, in welcher die Verriegelungseinrichtung 30 eine Zwischenstellung einnimmt.

In der Figur 3 ist zur Veranschaulichung zusätzlich ein Doppelgelenk 17 gezeigt, das in einer Aussparung 18 angeordnet ist. Der untere Abschnitt des Doppelgelenks ist Teil der Anlenkung der beiden Teilrahmen 13a, 13b; der obere Abschnitt dient zur Aufnahme eines der Scharniere 20 (s. Figur 1 und die Schwenkachse 5 in Figur 3).

Von der in Figur 3 gezeigten Zwischenstellung wird die Verriegelungseinrichtung 30 in eine Verriegelungsstellung überführt, wobei dies durch Umklappen der beiden Verriegelungselemente 32, 34 um die Schwenkachsen 36a, 36b nach unten manuell oder automatisch geschehen kann. Eine Möglichkeit zur automatischen Verschwenkung ist in der Querschnittsdarstellung gemäß der Figur 8 gezeigt, in der eine Feder 39 im Gelenk 33 dargestellt. Mehrere dieser Federn 39 sind hierbei in den Drehgelenken 33 und 35 angeordnet, die bei miteinander fluchtenden Schwenkachsen 36a, 36b die Verriegelungselemente 32, 34 von der Zwischenstellung (Figur 3) in die Verriegelungsstellung (Figur 4) drücken.

Die Verriegelungselemente 32, 34 sind in der Verriegelungsstellung gemäß der Figur 4 um ca. 100° gegenüber der Zwischenstellung gemäß der Figuren 2 und 3 verschwenkt. Ein Aufbiegen der beiden Teilrahmen 13a, 13b des Abdeckungsrahmens 13 ist in dieser Stellung aufgrund der Stellung des Drehgelenks 38 nicht möglich. Es resultiert somit eine sehr hohe Stabilität des Schotts 1, da es nicht mehr aus seiner Gebrauchsposition heraus geschleudert werden kann.

In den Figuren 6 und 7 ist eine zweite Variante der Verriegelungseinrichtung 30 dargestellt, die sich über die gesamte Breite des Abdeckungsrahmens 13 erstreckt. Dementsprechend sind mehr Anlenkungen 33, 35 an den Teilrahmen 13a, 13b vorgesehen, insbesondere auch solche in Nähe der Fixierstellen 14 (s.a. Figur 1).

Wie insbesondere den Figuren 6 und 7 zu entnehmen ist, ist die Gesamtstabilität des Schotts 1 aufgrund der in der Verriegelungsstellung abgeklappten Verriegelungseinrichtung 30 (Figur 7) erhöht. In der Ruhe- und Zwischenstellung (letztere in Figur 6 dargestellt) liegt die Verriegelungseinrichtung 30 in den beiden Ebenen der beiden Teilrahmen 13a, 13b, so dass eine sehr niedrige Packhöhe resultiert. Bei einem vollständigen Zusammenfalten des Windschotts 1 entsteht durch die Verriegelungseinrichtung 30 keine zusätzliche Packhöhe.

Zur Demontage bzw. Zusammenfalten des Schotts wird die Verriegelungseinrichtung 30 gegen die Federkraft der Federn 39 nach oben in die Zwischenstellung geschwenkt, das Windschott 1 aus dem PKW entfernt und zusammengeklappt.

Die Erfindung ist nicht auf das dargestellte Ausführungsbeispiel eines Windschotts beschränkt. So ist die Erfindung beispielsweise auch bei Sonnenschotts einsetzbar. Weitere Abwandlungen im Rahmen der Patentansprüche und ihrer Kombinationen fallen ebenfalls unter die Erfindung.

## Patentansprüche

1. Schott (1) für ein Personenkraftfahrzeug mit einem Schottrahmen (6) und mindestens einer innerhalb des Schottrahmens (6) angeordneten Flachmaterialbahn (1 0a) mit einer Abdeckung umfassend einen Abdeckungsrahmen (13) und mindestens eine innerhalb des Abdeckungsrahmens (13) angeordneten Flachmaterialbahn (10b), wobei der Schottrahmen (6) und der Abdeckungsrahmen (13) schwenkbar miteinander verbunden sind, wobei der Abdeckungsrahmen (13) in mindestens zwei Teilrahmen (13a, 13b) unterteilt ist, die über mindestens ein Drehgelenk (11) schwenkbar miteinander verbunden sind, so dass das Schott (1) aus einer gefalteten Aufbewahrposition in eine Gebrauchsposition und wieder zusammen faltbar ist, wobei eine am Abdeckungsrahmen (13) angeordnete Verriegelungseinrichtung (30) zur Fixierung der Teilrahmen (13a, 13b) relativ zueinander in der Gebrauchsposition des Schotts (1) vorgesehen ist, **dadurch gekennzeichnet, dass** die Verriegelungseinrichtung (30) im Bereich der Anlenkung des Schottrahmens am Abdeckungsrahmen (13) angeordnet ist.

2. Schott nach Anspruch 1, **dadurch gekennzeichnet, dass** die Verriegelungseinrichtung (30) schwenkbar am Abdeckungsrahmen (13) angeordnet ist.

3. Schott nach einem der vorhergehenden Ansprüche, **dadurch gekennzeichnet, dass** die Verriegelungseinrichtung (30) zumindest zwei zueinander bewegliche Verriegelungselemente (32, 34) umfasst, die jeweils an einem der beiden Teilrahmen (13a, 13b) des Abdeckungsrahmens (13) angeordnet sind.

4. Schott nach einem der vorhergehenden Ansprüche, **dadurch gekennzeichnet, dass** jeweils ein Verriegelungselement (32, 34) der Verriegelungseinrichtung an einem Teilrahmen (13a, 13b) schwenkbar angeordnet ist, wobei die beiden Verriegelungselemente (32, 34) selbst mittels mindestens einem Gelenk (38) miteinander schwenkbar verbunden sind.

5. Schott nach einem der vorhergehenden Ansprüche, **dadurch gekennzeichnet, dass** das Gelenk (38) zur Verbindung der beiden Verriegelungselemente (32, 34) ein Drehgelenk (38) ist, und dass die Schwenkachse (37) dieses Drehgelenks (38) stets senkrecht zu den Schwenkachsen (36a, 36b) der Verriegelungselemente (32, 34) und des Abdeckungsrahmens (13) verläuft.

6. Schott nach einem der vorhergehenden Ansprüche, **dadurch gekennzeichnet, dass** die Schwenkachse (37) des die beiden Verrieglungselemente (32, 34) verbindenden Drehgelenks (38) beim Aufklappen des Schotts (1) von der Aufbewahrposition in die Gebrauchsposition anfangs mit der Schwenkachse (12) des die beiden Teilrahmen (13a, 13b) verbindenden Drehgelenks (11) fluchtet.

7. Schott nach einem der vorhergehenden Ansprüche, **dadurch gekennzeichnet, dass** die Schwenkachse (37) des die beiden Verrieglungselemente (32, 34) verbindenden Drehgelenks (38) in der Verriegelungsstellung stets einen Winkel größer als 0° mit der Schwenkachse (12) des die beiden Teilrahmen (13a, 13b) verbindenden Drehgelenks (11) einnimmt.

8. Schott nach einem der vorhergehenden Ansprüche, **dadurch gekennzeichnet, dass** die Verriegelungseinrichtung (30) federbelastet ist und beim Auffalten des Schotts (1) automatisch in eine Verriegelungsstellung schwenkt.

9. Schott nach Anspruch 8, **dadurch gekennzeichnet, dass** die Federbelastung erst bei ganz aufgeklapptem Abdeckungsrahmen (13) auf die Verriegelungseinrichtung (30) wirkt.

10. Schott nach einem der vorhergehenden Ansprüche, **dadurch gekennzeichnet, dass** die Verriegelungseinrichtung (30) in der Ruhestellung im Wesentlichen in der oder den Ebenen des Abdeckungsrahmens (13) liegt.

11. Schott nach einem der vorhergehenden Ansprüche, **dadurch gekennzeichnet, dass** die Verriegelungseinrichtung (30) in der Verriegelungsstellung vom Abdeckungsrahmen (13) absteht.

12. Schott nach einem der vorhergehenden Ansprüche, **dadurch gekennzeichnet, dass** die Verriegelungseinrichtung (30) um mehr als 90° von der Ruheposition in die Verriegelungsstellung verschwenkt.

13. Schott nach einem der vorhergehenden Ansprüche, **dadurch gekennzeichnet, dass** die Verriegelungseinrichtung (30) mit dem Schottrahmen (6) einen Winkel von ca. 160° bis 200° einschließt.

14. Schott nach einem der vorhergehenden Ansprüche, **dadurch gekennzeichnet, dass** die Verriegelungseinrichtung (30) sich im Wesentlichen über die gesamte Breite des Abdeckungsrahmens (13) erstreckt.

15. Schott nach einem der vorhergehenden Ansprüche, **dadurch gekennzeichnet, dass** es als Windschott ausgebildet ist.

## Claims

1. A partition (1) for a passenger car having a partition frame (6) and at least one flat material web (10a) disposed within the partition frame (6), having a cover comprising a cover frame (13) and at least one flat material web (10b) disposed within the cover frame (13), the partition frame (6) and the cover frame (13) being pivotally connected to each other, the cover frame (13) being divided into at least two partial frames (13a, 13b) pivotally connected to each other by means of at least one pivot joint (11), so that the partition (1) can be unfolded from a folded storage position into a use position and folded back together again, a locking device (30) disposed on the cover frame (13) being provided for fixing the partial frames (13a, 13b) relative to each other in the use position of the partition (1), **characterized in that** the locking device (30) is disposed in the region of the pivoting connection of the partition frame to the cover frame (13).

2. The partition according to claim 1, **characterized in that** the locking device (30) is pivotally disposed on the cover frame (13).

3. The partition according to one of the preceding claims, **characterized in that** the locking device (30) comprises at least two locking elements (32, 34) displaceable relative to each other, each disposed on one of the two partial frames (13a, 13b) of the cover frame (13).

4. The partition according to one of the preceding claims, **characterized in that** one locking element (32, 34) of the locking device is pivotally disposed on each of the partial frames (13a, 13b), wherein the two locking elements (32, 34) are themselves pivotally connected to each other by means of at least one joint (38).

5. The partition according to one of the preceding claims, **characterized in that** the joint (38) for connecting the two locking elements (32, 34) is a pivot joint (38), and that the pivot axis (37) of said pivot joint (38) always runs perpendicular to the pivot axes (36a, 36b) of the locking elements (32, 34) and the cover frame (13).

6. The partition according to one of the preceding claims, **characterized in that** the pivot axis (37) of the pivot joint (38) connecting the two locking elements (32, 34) is initially flush with the pivot axis (12) of the pivot joint (11) connecting the two partial frames (13a, 13b) when unfolding the partition (1) from the storage position into the use position.

7. The partition according to one of the preceding claims, **characterized in that** the pivot axis (37) of the pivot joint (38) connecting the two locking elements (32, 34) always forms an angle in the locked position of greater than 0° with the pivot axis (12) of the pivot joint (11) connecting the two partial frames (13a, 13b).

8. The partition according to one of the preceding claims, **characterized in that** the locking device (30) is spring-loaded and pivots automatically into a locked position when the partition (1) is unfolded.

9. The partition according to claim 8, **characterized in that** the spring loading acts on the locking device (30) only after the cover frame (13) is fully unfolded.

10. The partition according to one of the preceding claims, **characterized in that** the locking device (30) in the rest position lies substantially in the plane or planes of the cover frame (13).

11. The partition according to one of the preceding claims, **characterized in that** the locking device (30) in the locked position protrudes from the cover frame (13).

12. The partition according to one of the preceding claims, **characterized in that** the locking device (30) pivots by more than 90° from the rest position into the locked position.

13. The partition according to one of the preceding claims, **characterized in that** the locking device (30) encloses an angle with the partition frame (6) of about 160° to 200°.

14. The partition according to one of the preceding claims, **characterized in that** the locking device (30) extends substantially over the entire width of the cover frame (13).

15. The partition according to one of the preceding claims, **characterized in that** said partition is implemented as a windblocker.

## Revendications

1. Cloison (1) pour un véhicule automobile, avec un cadre de cloison (6) et au moins une bande de matériau plat (10a) disposée au sein du cadre de cloison (6), avec un recouvrement comprenant un cadre de recouvrement (13) et au moins une bande de matériau plat (10b) disposée au sein du cadre de recouvrement (13), sachant que le cadre de cloison (6) et le cadre de recouvrement (13) sont reliés de manière pivotante l'un avec l'autre, sachant que le cadre de recouvrement (13) est divisé en au moins deux cadres partiels (13a, 13b), qui sont reliés de manière pivotante l'un avec l'autre via au moins une articulation rotoïde (11) de telle manière que la cloison (1) soit dépliable depuis une position de rangement repliée vers une position d'utilisation et de nouveau repliable, sachant qu'il est prévu un dispositif de verrouillage (30) disposé au cadre de recouvrement (13) pour la fixation des cadres partiels (13a, 13b) l'un relativement à l'autre à la position d'utilisation de la cloison (1), **caractérisée en ce que** le dispositif de verrouillage (30) est disposé au cadre de recouvrement (13) dans la zone d'articulation du cadre de cloison.

2. Cloison selon la revendication 1, **caractérisée en ce que** le dispositif de verrouillage (30) est disposé de manière pivotante au cadre de recouvrement (13).

3. Cloison selon l'une des revendications précédentes, **caractérisée en ce que** le dispositif de verrouillage (30) comporte au moins deux éléments de verrouillage (32, 34) mobiles l'une vers l'autre, qui sont disposés respectivement à l'un des deux cadres partiels (13a, 13b) du cadre de recouvrement (13).

4. Cloison selon l'une des revendications précédentes, **caractérisée en ce qu'**un élément de verrouillage (32, 34) du dispositif de verrouillage est respectivement disposé de manière pivotante à un cadre partiel (13a, 13b), sachant que les deux éléments de verrouillage (32, 34) sont eux-mêmes reliés l'un à l'autre de manière pivotante via au moins une articulation (38),

5. Cloison selon l'une des revendications précédentes, **caractérisée en ce que** l'articulation (38) pour la connexion des deux éléments de verrouillage (32, 34) est une articulation rotoïde (38), et que l'axe de pivotement (37) de cette articulation rotoïde (38) s'étend toujours perpendiculairement aux axes de pivotement (36a, 36b) des éléments de verrouillage (32, 34) et du cadre de recouvrement (13).

6. Cloison selon l'une des revendications précédentes, **caractérisée en ce que** l'axe de pivotement (37) de l'articulation rotoïde (38) reliant les deux éléments de verrouillage (32, 34) est, au début, alignée avec l'axe de pivotement (12) de l'articulation rotoïde (11) reliant les deux cadres partiels (13a, 13b) lors du dépliage de la cloison (1) de la position de rangement vers la position d'utilisation.

7. Cloison selon l'une des revendications précédentes, **caractérisée en ce que** l'axe de pivotement (37) de l'articulation rotoïde (38) reliant les deux éléments de verrouillage (32, 34) forme toujours un angle supérieur à 0° avec l'axe de pivotement (12) de l'articulation rotoïde (11) reliant les deux cadres partiels (13a, 13b) à la position de verrouillage.

8. Cloison selon l'une des revendications précédentes, **caractérisée en ce que** le dispositif de verrouillage (30) est soumis à l'action d'un ressort et pivote automatiquement à une position de verrouillage lors du dépliage de la cloison (1).

9. Cloison selon la revendication 8, **caractérisée en ce que** la charge du ressort n'agit sur le dispositif de verrouillage (30) qu'une fois le cadre de recouvrement (13) totalement déplié.

10. Cloison selon l'une des revendications précédentes, **caractérisée en ce que** le dispositif de verrouillage (30) est disposé essentiellement dans le ou les plan(s) du cadre de recouvrement (13) à la position de repos.

11. Cloison selon l'une des revendications précédentes, **caractérisée en ce que** le dispositif de verrouillage (30) est distancé du cadre de recouvrement (13) à la position de verrouillage.

12. Cloison selon l'une des revendications précédentes, **caractérisée en ce que** le dispositif de verrouillage (30) pivote de plus de 90° de la position de repos à la position de verrouillage.

13. Cloison selon l'une des revendications précédentes, **caractérisée en ce que** le dispositif de verrouillage (30) forme avec le cadre de cloison (6) un angle de 160° à 200° environ.

14. Cloison selon l'une des revendications précédentes, **caractérisée en ce que** le dispositif de verrouillage (30) s'étend essentiellement sur toute la largeur du cadre de recouvrement (13).

15. Cloison selon l'une des revendications précédentes, **caractérisée en ce qu'**elle se présente sous la forme d'un pare-vent.
